# EUROPEAN PATENT SPECIFICATION

(11) **EP 0 333 101 B1**
(45) Date of publication and mention of the grant of the patent: **01.06.1994**
(21) Application number: 89104421.6
(22) Date of filing: 13.03.1989
(51) Int. Cl.: G11B 5/66, G11B 5/84

(54) **Process for manufacturing magnetic recording material**
Verfahren zur Herstellung von magnetischem Aufzeichnungsmaterial
Procédé de fabrication d'un matériau d'enregistrement magnétique

(30) Priority: 15.03.1988 JP 59537/88
(43) Date of publication of application: 20.09.1989
(73) Proprietor: NIHON SHINKU GIJUTSU KABUSHIKI KAISHA, Chigasaki-shi Kanagawa-ken (JP)
(72) Inventor: Nakamura, Kyuzo, Inba-gun Chiba-ken (JP); Ota, Yoshifumi, Inba-gun Chiba-ken (JP); Ishikawa, Michio, Inba-gun Chiba-ken (JP); Tani, Noriaki, Inba-gun Chiba-ken (JP); Hashimoto, Masanori, Inba-gun Chiba-ken (JP)
(74) Representative: Schmidt-Evers, Jürgen, Dipl.-Ing.

(56) References cited:
- EP-A- 0 243 672
- Patent Abstracts of Japan,vo.12, no.235(P-725)(3082)6 th July 1988
- PATENT ABSTRACTS OF JAPAN, vol. 11, no. 107 (P-563)[2554], 4th April 1987;
- IEEE transactions on magnetics, vol. MAG-15, no. 3, pp1135-1137, july 1979
- IEEE transactions on magnetics, vol. Mag-15, 6,1546

## Description

### BACKGROUND OF THE INVENTION

The present invention relates to an improvement in the process for manufacturing of a magnetic recording material having a high coercive force.

### ( Prior Art )

A magnetic recording material manufactured by first forming a Cr film on a non-magnetic substrate made of aluminum or the like by the vacuum deposition method or the sputtering method, then forming a Co film on the Cr film and epitaxially growing the Co film is known. Since this magnetic recording material has a high coercive force, the recording material is widely used as a hard disc medium on which high-density recording is possible.

For further enhancing the coercive force to meet the desire for higher performance of the magnetic film material, there has been adopted a method in which a Co alloy containing a metal such as Ni, Cr, W, Ta or Pt is used as the material of the film to be formed on the Cr film.

### (Problem to Be Solved by the Invention)

When a Co alloy made of Co containing a metal such as Ni, Cr, W, Ta or Pt is used as the material of film to be formed on the Cr film, the coercive force increases but this increase is limited, so that a further enhanced coercive force is desired.

It is therefore a primary object of the present invention to provide a method of manufacturing of a magnetic recording material by which the above-mentioned disadvantage is overcome and the coercive force is highly enhanced.

### (Means for Solving the Problem)

We have made research with a view to attaining this object, and, as the result, have found that when a Co alloy film formed of Co containing Cr is used and a negative bias voltage is applied to the substrate during the formation of the film, the coercive force is highly enhanced.

Developed from this finding, the present invention provides a process for manufacturing of a magnetic recording material by first forming a Cr film on a non-magnetic substrate by the sputtering method, then forming a Co alloy film on the Cr film and epitaxially growing the Co alloy film, said process being characterized in that the Co alloy film is a film of a Co alloy containing at least Cr and a negative bias voltage is applied to the substrate during the formation of the Cr film and/or the Cr-containing Co alloy film.

Any of Co alloys made of Co containing at least Cr can be used as the Co alloy in the present invention, and a three-component alloy containing a metal such as Ni or Ta in addition to Co and Cr can also be used.

The sputtering method using a direct current magnetron cathode is employed for forming the Cr film and the Co alloy film on the non-magnetic substrate.

It is preferred that the negative bias voltage to be applied to the substrate during the formation of the Cr film and/or the Cr-containing Co-alloy film be in the range of from - 100 V to - 400 V.

When the formation of the Co alloy film on the Cr film is carried out by the high-frequency sputtering method, the coercive force of the magnetic recording material enhanced by the present invention is further increased. The negative bias voltage to be applied in this case is preferably in the range of from - 10 V to-200 V.

The reason why the coercive force is enhanced when a Cr-containing Co alloy is used as the material of the film to be formed on the Cr film and a negative bias voltage is applied to the substrate during the formation of the film is thought to be as follows.

Namely, when a Cr film is formed on the substrate by the sputtering method, the (110) plane of the bcc structure of Cr is oriented in parallel to the surface of the substrate and columnar particles which are isolated from one another through relatively large spaces are formed. When a Co alloy is sputtered on the surface of the Cr film composed of such columnar particles, the epitaxial growth occurs in such a manner that the C axis of the hcp structure of the Co alloy is in parallel to the surface of the substrate and therefore the Co alloy film forms an aggregate of fine particles isolated from one another. Since this Co alloy has a large crystalline magnetic anisotropy and the direction of the anisotropy is in agreement with the direction of the C axis, the two-layer film of the Co alloy film layer and the Cr film layer is comprised of an aggregate of fine particles having a crystalline magnetic anisotropy in the plane, with the result that a high coercive force is generated. When a Cr-containing Co alloy film is used as the Co alloy film, Cr is segregated in the grain boundary of crystal grains to form a non-magnetic layer and promote the isolation among the crystal grains, with the result that a further increased coercive force is obtained. Moreover, when sputtering is carried out in which a negative bias voltage is applied to the substrate during the formation of the Cr film and the Cr-containing Co alloy film, ions of metals such as Co and Cr are accelerated and are implanted into the substrate to activate the diffusion of metal atoms present on the surface and further advance the segragation of Cr, with the result that a very high coercive force is obtained.

### (Embodiments)

### Brief Description of the Drawings:

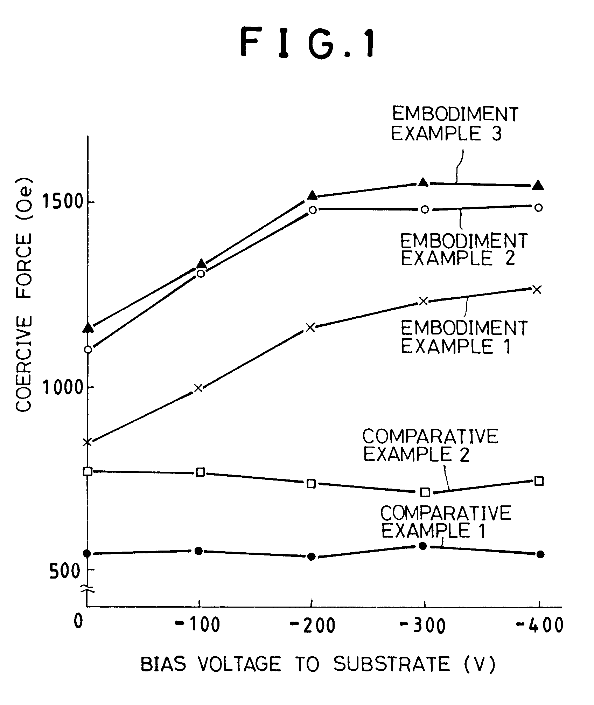

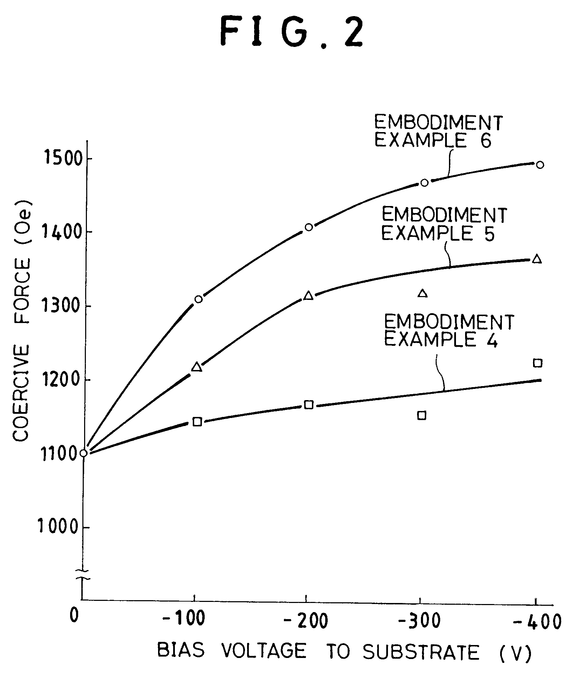

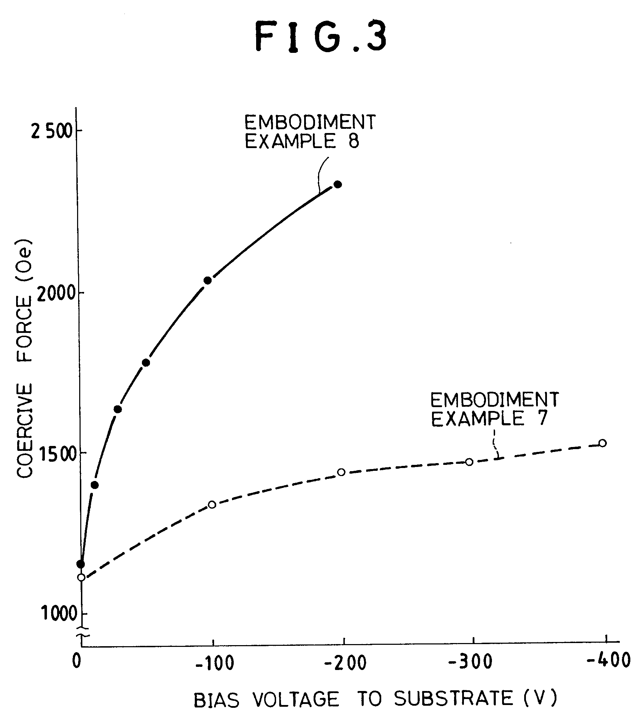

Fig. 1 is a characteristic diagram illustrating the relation between the coercive force of the magnetic recording material and the negative bias voltage applied to the substrate in the Examples of the present invention and the Comparative Examples. Figs. 2 and 3 are characteristic diagrams illustrating the relation between the coercive force of the magnetic recording material and the negative bias voltage applied to the substrate in the Examples of the present invention.

An example of the apparatus for use in carrying out the process of the present invention will now be described.

A pipe for introducing an inert gas such as argon is connected to a treatment chamber which is connected to an evacuating system such as an exterior vacuum pump so that the vacuum of the treatment chamber is freely adjusted. A plurality of magnetron sputtering cathodes are arranged in the treatment chamber so that a target can be supported on each cathode. Moreover, a tray moving at a speed of 200 mm/min is provided in the treatment chamber. A substrate is placed on the tray, and while the tray is moved, a Cr film and a Cr-containing Co alloy film are formed in sequence on the substrate by the sputtering method. A brush is used for the entire tray for applying a bias voltage to the substrate, and the on-off operation of the application of the bias voltage is performed according to the relation between the position of the tray and the position of the cathodes. The sputtering power is adjusted according to the materials and thicknesses of the films to be formed on the substrate.

The process for manufacturing a magnetic recording material by using the above-mentioned apparatus according to the present invention will now be described in detail with reference to the following Embodiment Examples and Comparative Examples.

### Example 1

A Ni/P-plated aluminum hard disk substrate having a diameter of 3.5 inches was placed on the tray in the above-mentioned treatment chamber, and a vacuum of 8 x 10⁻⁷ Torr or less was produced in the treatment chamber through the evacuation system and argon gas was introduced into the treatment chamber through the gas introducing pipe so that the vacuum of the treatment chamber was 2 x 10⁻³ Torr. While the tray kept heated at 200°C was moved in the treatment chamber and a negative bias voltage of - 100 V, - 200 V, - 300 V or - 400 V was applied to the substrate through the tray, a Cr film having a thickness of 1500 Å was formed on the substrate by the direct current magnetron sputtering method and a film of a Co-alloy containing 10 atom % of Cr was then formed in a thickness of 400 Å on the Cr film. Then, a C film having a thickness of 400 Å was formed on the Co/Cr-alloy film without application of a negative bias voltage to the substrate, whereby a magnetic recording material was produced. The coercive force of the obtained magnetic recording material was measured with respect to each of the applied negative bias voltages. The obtained values are shown in Fig. 1.

The coercive force was measured with a vibrating fluxmeter (VSM).

### Example 2

A magnetic recording material was manufactured in the same manner as described in Example 1 except that a Co alloy containing 10 atom % of Cr and 20 atom % of Ni was used for the formation of the Co alloy film. The coercive force of the obtained magnetic recording material was measured in the same manner as described in Example 1. The measured values are shown in Fig. 1.

### Example 3

A magnetic recording material was manufactured in the same manner as described in Example 1 except that a Co alloy containing 12 atom % of Cr and 2 atom % of Ta was used for the formation of the Cr-containing Co alloy film. The coercive force of the obtained magnetic recording material was measured in the same manner as described in Example 1. The obtained measured values are shown in Fig. 1.

### Comparative Example 1

A magnetic recording material was manufactured in the same manner as described in Example 1 except that a film composed solely of Co was formed instead of the Cr-containing Co alloy film. The coercive force of the obtained magnetic recording material was measured in the same manner as described in Example 1. The obtained measured values are shown in Fig. 1.

### Comparative Example 2

A magnetic recording material was manufactured in the same manner as described in Example 1 except that a film of a Co alloy containing 20 atom % of Ni was formed instead of the Cr-containing Co alloy film. The coercive force of the obtained magnetic recording material was measured in the same manner as described in Example 1. The obtained measured values are shown in Fig. 1.

As is apparent from Fig. 1 showing the measured values of the coercive forces of the magnetic recording materials obtained in the Embodiment Examples 1,2 and 3 and Comparative Examples 1 and 2, the coercive force was increased in Examples 1, 2 and 3 where a film of a Co alloy containing at least Cr was used as the Co alloy film and a negative bias voltage was applied to the substrate during the formation of the films, but the coercive force was not increased in Comparative Examples 1 and 2 where a film composed solely of Cr or a Cr-free Co-Ni alloy film was formed even when a bias voltage was applied to the substrate during the formation of the films.

Accordingly, it was confirmed that in the magnetic recording materials obtained in Examples 1, 2 and 3, the coercive force was improved.

### Example 4

A magnetic recording material was manufactured in the same manner as descrived in Example 1 except that a Co alloy containing 10 atom % of Cr and 20 atom % of Ni was used for the formation of the Cr-containing Co alloy film and a bias voltage was applied to the substrate through the tray only during the formation of the Cr film. The coercive force of the obtained magnetic recording material was measured in the same manner as described in Example 1. The obtained measured values are shown in Fig. 2.

### Example 5

A magnetic recording material was manufactured in the same manner as described in Example 1 except that a Co alloy containing 10 atom % of Cr and 20 atom % of Ni was used for the formation of the Cr-containing Co alloy film and a negative bias voltage was applied to the substrate through the tray only during the formation of the Co-Cr-Ni alloy film. The coercive force of the obtained magnetic recording material was measured in the same manner as described in Example 1. The obtained measured values are shown in Fig. 2.

### Example 6

A magnetic recording material was manufactured in the same manner as described in Example 1 except that a Co alloy containing 10 atom % of Cr and 20 atom % of Ni was used for the formation of the Cr-containing Co alloy film and a negative bias voltage was applied to the substrate through the tray during the formation of the Cr film and during that of the Co-Cr-Ni alloy film. The coercive force of the obtained magnetic recording material was measured in the same manner as described in Example 1. The obtained measured values are shown in Fig. 2.

As is apparent from Fig. 2 showing the measured values of the coercive forces of the magnetic recording materials obtained in Examples 4, 5 and 6, the coercive force was increased in each of all the Embodiment Examples including Example 4 where the negative bias voltage was applied only during the formation of the Cr film, Example 5 where the negative bias voltage was applied only during the formation of the Cr-containing Co alloy film and Example 6 where the negative bias voltage was applied during the formation of both of the Cr film and the Cr-containing Co alloy film. The increase of the coercive force was especially conspicuous when the negative bias voltage was applied during the formation of both of the Cr film and the Cr-containing Co alloy film.

Accordingly, it was confirmed that the coercive force was increased in the magnetic recording materials obtained in Examples4, 5 and 6.

### Example 7

A magnetic recording material was manufactured in the same manner as described in Example 1 except that a Co alloy containing 10 atom % of Cr and 20 atom % of Ni was used for the formation of the Cr-containing Co alloy film. The coercive force of the obtained magnetic recording material was measured in the same manner as described in Example 1. The obtained measured values are shown in Fig. 3.

### Example 8

A magnetic recording material was manufactured in the same manner as described in Example 1 except that a Co alloy containing 10 atom % of Cr and 20 atom % of Ni was used for the formation of the Cr-containing Co alloy film and this Co-Cr-Ni alloy film was formed by the sputtering method using high-frequency magnetron cathodes. The coercive force of the obtained magnetic recording material was measured in the same manner as described in Example 1. The obtained measured values are shown in Fig. 3. The ion current supplied to the tray at the time of sputtering on the high-frequency magnetron cathodes was about 5 times the ion current supplied to the tray at the time of sputtering on the direct current magnetron cathodes.

As is apparent from Fig. 3 showing the measured values of the coercive forces of the magnetic recording materials obtained in Examples 7 and 8, it was confirmed that the coercive force was prominently improved in Example 8 where the formation of the Cr-containing Co alloy film on the Cr film was carried out by the high-frequency sputtering method.

Although a pure Cr-made film is used as a base film in the foregoing embodiment examples, a magnetic recording material using in place of said pure Cr-made film a base film formed of Cr plus at least one of rare earth elements, Si, Cu and P,was manufactured in the same manner as in the foregoing examples and measured of its coercive force to find out that said coercive force thereof has been improved.

### (Effects of the Invention)

As is apparent from the foregoing description, according to the present invention, by using a Co alloy containing at least Cr for the Co alloy film to be formed on the Cr film formed on a non-magnetic substrate by the sputtering method and applying a negative bias voltage to the substrate during the formation of the Cr film and/or the Cr-containing Co alloy film, the coercive force is highly improved over the coercive force attained in the conventional method where a Co alloy is used as the material of the film to be formed on the Cr film. Accordingly, a magnetic recording material having a high coercive force can be provided according to the present invention.

Furthermore, by carrying out the formation of the Cr-containing Co alloy film on the Cr film by the high-frequency sputtering method, the coercive force improved over the coercive force attained by the conventional process where a Co alloy is used as the material of the film to be formed on the Cr film can be further increased.

## Claims

1. A process for manufacturing a magnetic recording material by first forming a Cr-film on a non-magnetic substrate by the sputtering method, then forming a Co-alloy upper-layer film on the Cr-film and epitaxially growing the Co-alloy film, characterized in that the Co-alloy film is a film of a Co-alloy containing at least Cr and a negative bias voltage is applied to the substrate during the formation of the Cr-film and/or the Cr-containing Co-alloy film.

2. The process for manufacturing a magnetic recording material according to claim 1, characterized in that the Cr-containing Co-alloy film is formed on the Cr-film by the high-frequency sputtering method.

3. The process for manufacturing a magnetic recording material according to claim 1, characterized in that the negative bias voltage is in the range of -100 V to -400 V.

4. The process for manufacturing a magnetic recording material according to claim 2, characterized in that the negative bias voltage is in the range of -10 V to -200 V.

## Patentansprüche

1. Verfahren zur Herstellung von magnetischem Aufzeichnungsmaterial, wobei zuerst ein Cr-Film auf einem nicht-magnetischem Substrat durch das Vakuumzerstäube-Verfahren gebildet wird, dann ein Co-Legierungs-Deckschicht-Film auf dem Cr-Film gebildet wird und epitaktisches Wachsen des Co-Legierungs-Films, dadurch gekannzeichnet, daß der Co-Legierungs-Film ein Film einer Co-Legierung mit mindestens Cr ist und eine negative Vorspannung auf das Substrat während der Bildung des Cr-Films und/oder des Cr-enthaltenden Co-Legierungs-Films angelegt wird.

2. Verfahrten zur Herstellung von magnetischem Aufzeichnungsmaterials gemäß Anspruch 1, dadurch gekennzeichnet, daß der Cr-enthaltende Co-Legierungs-Film auf dem Cr-Film durch das Hochfrequenz-Vakuumzerstäube-Verfahren gebildet wird.

3. Verfahren zur Herstellung von magnetischem Aufzeichnungsmaterials gemäß Anspruch 1, dadurch gekennzeichnet, daß die negative Vorspannung im Bereich von -100 V bis -400 V liegt.

4. Verfahren zur Herstellung von magnetischem Aufzeichnungsmaterials gemäß Anspruch 2, dadurch gekennzeichnet, daß die negative Vorspannung im Bereich von -10 V bis -200 V liegt.

## Revendications

1. Procédé de fabrication d'un matériau d'enregistrement magnétique, d'abord par la formation d'un film de Cr sur un substrat amagnétique par un procédé de pulvérisation, puis par la formation d'une couche supérieure sous forme d'un film à d'alliage de Co sur le film de Cr et par la croissance épitaxiale du film d'alliage de Co, caractérisé en ce que le film d'alliage de Co est un film d'un alliage de Co contenant au moins Cr et en ce qu'une tension de polarisation négative est appliquée au substrat durant la formation du film de Cr et/ou du film d'alliage de Co contenant Cr.

2. Procédé de fabrication d'un matériau d'enregistrement magnétique selon la revendication 1, caractérisé en ce que le film d'alliage de Co contenant Cr est formé sur le film de Cr par un procédé de pulvérisation à haute fréquence.

3. Procédé de fabrication d'un matériau d'enregistrement magnétique selon la revendication 1, caractérisé en ce que la tension de polarisation négative est comprise entre -100 V et -400 V.

4. Procédé de fabrication d'un matériau d'enregistrement magnétique selon la revendication 2, caractérisé en ce que la tension de polarisation négative est comprise entre -10 V et -200 V.
